(19) Europäisches Patentamt
European Patent Office
Office européen des brevets

(11) **EP 4 588 656 A1**

(12) **EUROPEAN PATENT APPLICATION**
published in accordance with Art. 153(4) EPC

(43) Date of publication:
**23.07.2025 Bulletin 2025/30**

(51) International Patent Classification (IPC):
**B32B 27/00** (2006.01)     **B32B 27/18** (2006.01)
**B32B 27/30** (2006.01)

(21) Application number: **23865518.7**

(52) Cooperative Patent Classification (CPC):
**B32B 27/00; B32B 27/18; B32B 27/30**

(22) Date of filing: **12.09.2023**

(86) International application number:
**PCT/JP2023/033177**

(87) International publication number:
**WO 2024/058166 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.09.2022 JP 2022144719**

(71) Applicant: **SEKISUI CHEMICAL CO., LTD.**
**Osaka-shi**
**Osaka**
**530-8565 (JP)**

(72) Inventors:
• **NAKADATE, Junichi**
  **Mishima-gun, Osaka 618-0021 (JP)**
• **YASUI, Hidefumi**
  **Mishima-gun, Osaka 618-0021 (JP)**

(74) Representative: **Ter Meer Steinmeister & Partner**
**Patentanwälte mbB**
**Nymphenburger Straße 4**
**80335 München (DE)**

(54) **TRANSFER-TYPE CURABLE RESIN SHEET FOR COATING, AND METHOD FOR FORMING COATING**

(57) A transfer-type curable resin sheet for coating, including a coating layer composed of a curable resin composition that is capable of being cured by heat, moisture, or an active energy ray; and a transfer layer composed of a thermoplastic resin, the tack value at 23°C on the surface of the coating layer on the side opposite to the surface on which the transfer layer is provided being 300 N/cm$^2$ or more and 4,000 N/cm$^2$ or less.

Fig. 1

## Description

Technical Field

The present invention relates to a transfer-type curable resin sheet for coating, and a method for forming a coating using the transfer-type curable resin sheet for coating.

Background Art

Conventionally, coatings have been applied to various products such as furniture, steel sheets, and vehicle bodies to impart functions such as aesthetic quality, durability, weather resistance, and scuff resistance. When industrially coating products with three-dimensional shapes, the coating is generally performed by air or electrostatic spraying. From the viewpoint of the generation of loss during coating, the $CO_2$ emitted from the factory, and the large capital investment in spray coating, its replacement with decorative technology using resin film is currently being studied.

Decorative technology is a technology that produces high functionality and aesthetic quality by attaching a resin film (decorative film) printed with characters or designs in white, black, color ink or the like to the surface of products for decoration, in various fields such as household electrical appliances, automotive interiors, and miscellaneous goods. For example, Patent Literature 1 proposes, as a decorative film, a coating film with a protective layer formed by an active energy ray curable composition on a film substrate. Patent Literature 1 describes that the chemical resistance, scuff resistance, and the like of a coated surface can be improved by forming the protective layer with an active energy ray curable composition having a specific composition.

Citation List

Patent Literature

PTL1: JP 5394995 B

Summary of Invention

Technical Problem

In the coating film disclosed in Patent Literature 1, since the base film itself is not adhesive, an adhesive layer formed by a pressure-sensitive adhesive is generally formed on the surface on the side opposite to the protective layer, in order to attach it to various products. However, when a pressure-sensitive adhesive is used for attachment, detachment often occurs over time, making it unsuitable for outdoor applications that require durability and weather resistance.

In addition, when using a coating film as disclosed in Patent Literature 1, a surface layer equivalent to a coating can also be formed on the surface of a plastic molding by insert molding to mold a plastic material supplied from an injection mold and at the same time decorate the surface with the coating film. However, as this method is based on injection molding, it is difficult to apply it to steel sheet materials other than plastic materials and the like.

To apply it to steel sheet materials and the like, attachment by vacuum forming can be considered. However, with vacuum forming, the film itself must have adhesive or bonding properties to be appropriately attached to the surface of various products. On the other hand, if the film itself is imparted with adhesive or bonding properties, the film becomes too flexible and vulnerable to scratches.

Therefore, the object of the present invention is to provide a transfer-type curable resin sheet for coating that can be appropriately adhered to various articles by vacuum forming and the like and has excellent scratch resistance.

Solution to Problem

As a result of diligent studies, the present inventors have found that the aforementioned problems can be solved by making a resin sheet into a transfer-type multilayer structure having a coating layer containing a curable resin composition, and a transfer layer, and by setting the tack value at 23°C on the adhesive surface of the coating layer to a certain range, thereby accomplishing the present invention described below. Specifically, the present invention provides [1] to [7] below.

> [1] A transfer-type curable resin sheet for coating, comprising: a coating layer comprising a curable resin composition that is capable of being cured by heat, moisture, or an active energy ray; and a transfer layer comprising a thermoplastic resin, a tack value at 23°C on a surface of the coating layer on a side opposite to a surface on which the transfer layer is provided being 300 N/cm$^2$ or more and 4,000 N/cm$^2$ or less.

[2] The transfer-type curable resin sheet for coating according to [1], wherein the transfer layer has a tensile elongation at break at 120°C in both MD and TD of 500% or more.

[3] The transfer-type curable resin sheet for coating according to [1] or [2], wherein the transfer layer has a tensile elongation at break at 100°C in both MD and TD of 500% or more.

[4] The transfer-type curable resin sheet for coating according to [1] to [3], wherein the curable resin composition comprises a (meth)acrylic resin (A) and the (meth)acrylic resin (A) has a weight-average molecular weight of 100,000 or more and 1,000,000 or less, is in solid form, and has a plurality of functional groups.

[5] The transfer-type curable resin sheet for coating according to [4], wherein the (meth)acrylic resin (A) is a (meth) acrylic polyol (A1), and the curable resin composition comprises a blocked isocyanate (B).

[6] The transfer-type curable resin sheet for coating according to [4], wherein the (meth)acrylic resin (A) is a polymer (A2) having a (meth)acryloyl group, and the curable resin sheet comprises a radical polymerization initiator (C) that generates radicals by heat or an active energy ray.

[7] A method for forming a coating, wherein the transfer-type curable resin sheet for coating according to any one of [1] to [6] is attached to an object to be coated and then the coating layer is cured to form the coating.

[8] The method for forming a coating according to [7], wherein the transfer layer is peeled off from the coating layer to remove the transfer layer from the object to be coated.

Advantageous Effects of Invention

The present invention can provide a transfer-type curable resin sheet for coating that allows to appropriately adhere a coating layer to various articles by vacuum forming or the like, and has excellent scratch resistance.

Brief Description of Drawings

[Fig. 1] Fig. 1 is a schematic cross-sectional view showing an example of the transfer-type curable resin sheet for coating.
[Fig. 2] Fig. 2 is a schematic cross-sectional view showing an example of the transfer-type curable resin sheet for coating.
[Fig. 3] Fig. 3 is a schematic cross-sectional view showing an example of the transfer-type curable resin sheet for coating.
[Fig. 4] Fig. 4 is a schematic cross-sectional view showing an example of the method for forming a coating on an object to be coated.
[Fig. 5] Fig. 5 is a schematic view of a device to perform TOM forming.
[Fig. 6] Fig. 6 is a schematic cross-sectional view showing an example of the method for forming a coating on an object to be coated.

Description of Embodiments

Hereinafter, the present invention will be described in more detail using embodiments.
The transfer-type curable resin sheet for coating of the present invention (hereinafter sometimes simply referred to as "transfer-type resin sheet") is a multilayer sheet including a coating layer and a transfer layer. In the transfer-type resin sheet, the coating layer is formed on one surface of the transfer layer and these are integrated. The coating layer contains a curable resin composition that is capable of being cured by heat, moisture, or an active energy ray. The transfer layer contains a thermoplastic resin.
The transfer-type resin sheet is attached to various articles to be coated by the coating layer (hereinafter also referred to as the object to be coated) so that the coating layer is in contact with the object to be coated. The coating layer is then cured to form a cured coating layer on the surface of the object to be coated, and the cured coating layer forms a coating. The transfer layer should be peeled off from the coating layer to be removed from the object to be coated, for example, after the coating layer has been cured.

Hereinafter, the coating layer and transfer layer used in the transfer-type resin sheet will be described in detail.

<Coating layer>

The coating layer constituting the transfer-type resin sheet of the present invention has a tack value at 23°C (hereinafter also simply referred to as "tack value") on the surface on the side opposite to the surface on which the transfer layer described below is provided, of 300 N/cm$^2$ or more and 4,000 N/cm$^2$ or less. When the tack value is less than the lower limit value, good adhesion to the adherend cannot be exhibited. When the tack value exceeds the upper limit value, the hardness of the coating film after curing cannot be sufficiently improved and excellent scratch resistance cannot be imparted.

From the above viewpoints, the tack value is preferably 500 N/cm$^2$ or more and 3,000 N/cm$^2$ or less, and more preferably 700 N/cm$^2$ or more and 2,500 N/cm$^2$ or less.

The coating layer is used, for example, to protect or decorate the adherend, or to impart a unique function other than these. The coating layer may be a colored layer or a clear layer as described below. Examples of the unique function of the coating layer include a function as a thermal barrier coating. There, the coating formed by the coating layer may function as a thermal barrier coating, in which case a thermal barrier material should be incorporated in the thermosetting resin composition to make the coating layer a thermal barrier layer. Surface irregularities can also be added to the coating layer to impart surface properties such as a matte finish or emboss. In addition, functions such as anti-rust, antifungal, heat insulation, antistatic, and the like can also be achieved by blending components suited to the purpose in the curable resin composition.

The surface of the coating layer on the side opposite to the surface on which the transfer layer is provided is the adhesive surface on which the object to be coated is attached.

The coating layer used in the present invention is formed of a curable resin composition that is capable of being cured by heat, moisture or an active energy ray. Examples of active energy rays include ultraviolet rays, electron beams, and ionizing radiation such as $\alpha$, $\beta$, and $\gamma$ rays, but any type of energy may be used as long as it can generate radical active species. Among these, the curable resin composition is preferably a curable resin composition that is capable of being cured by heat or an active energy ray.

The curable resin composition should contain a resin containing a functional group that can be cured by heat, moisture or an active energy ray by reacting with the resin itself or with a curing agent. Examples of the resin used in the curable resin composition include curable resins, and specifically, examples of resins that are cured by heat or an active energy ray include (meth)acrylic resins, polycarbonate resins, polyester resins, and epoxy resins; among these, (meth) acrylic resins are preferred. The resin that is cured by moisture should be a moisture-curing resin as described below.

Hereinafter, a detailed description will be given of the case where at least a (meth)acrylic resin is used as the resin in the curable resin composition.

((Meth)acrylic resin)

Examples of the (meth)acrylic resin include a (meth)acrylic resin having a plurality of functional groups. The functional group is a group that can react by heat or an active energy ray. Examples of the functional group preferably include functional groups that react with the functional groups (e.g., isocyanate group) contained in the curing agent described below, and functional groups having a photopolymerizable unsaturated bond, and specifically, a hydroxy group, an amino group, a carboxyl group, a (meth)acryloyl group, a vinyl group, and a glycidyl group. The (meth)acrylic resin may have only one kind of functional group, or may have two or more kind of functional groups. Among these, the (meth)acrylic resin preferably has at least one of a hydroxy group or a (meth)acryloyl group.

Therefore, the (meth)acrylic resin is preferably a (meth)acrylic polyol having a plurality of hydroxy groups, or a polymer having a plurality of (meth)acryloyl groups.

The (meth)acrylic resin is preferably an acrylic polymer obtained by polymerizing a monomer mixture containing (meth)acrylic ester monomers and functional group-containing monomers having the above functional groups such as a hydroxy group, an amino group, or a carboxyl group. Such acrylic polymer allows functional groups to be incorporated in the acrylic polymer via the functional group-containing monomers. The monomer mixture may also contain a monomer other than the (meth)acrylic ester monomers and the functional group-containing monomers, such as styrene derivative monomers and the like. Herein, (meth)acrylic means methacrylic or acrylic, and the same applies to other similar terms.

Examples of the above (meth)acrylic ester monomer include (meth)acrylic ester monomers that do not have the above functional groups, which include alkyl (meth)acrylates in which the alkyl group has 1 or more and 18 or less carbon atoms, such as methyl (meth)acrylate and ethyl (meth)acrylate, (meth)acrylates having an aromatic ring, such as benzyl (meth)acrylate and phenoxy diethylene glycol (meth)acrylate, and 2-ethoxyethyl (meth)acrylate.

Examples of functional group-containing monomers include hydroxy group-containing monomers, amino group-containing monomers, and carboxyl group-containing monomers. These may be used alone, or two or more may be used in combination. Of the above, the functional group-containing monomer is preferably a hydroxy group-containing monomer. Furthermore, the above (meth)acrylic polyol can be obtained by polymerizing a monomer mixture containing (meth)acrylic ester monomers and hydroxy group-containing monomers.

The above hydroxy group-containing monomer is not particularly limited, and examples thereof include (meth)acrylic ester monomers having a hydroxy group, such as 2-hydroxyethyl (meth)acrylate. The amino group-containing monomer is not particularly limited, and examples thereof include (meth)acrylic ester monomers having an amino group, such as 2-aminoethyl (meth)acrylate. The carboxyl group-containing monomer is not particularly limited, and examples thereof include (meth)acrylic acid.

The styrene derivative monomer is not particularly limited, and examples thereof include styrene, $\alpha$-methyl-styrene, $\alpha$-ethylstyrene, p-methylstyrene, p-methoxystyrene, p-phenylstyrene, p-ethoxystyrene, p-chlorostyrene, m-chlorostyrene, and o-chlorostyrene.

The (meth)acrylic resin may also be a copolymer obtained by block or graft polymerization of the acrylic polymer described above and another monomer or polymer. In this case, examples of the other monomer or polymer include acrylic-based, styrene-based, maleic acid-based, imide-based, silicone-based, and fluorinated monomers, or polymers of these monomers.

Furthermore, the functional group of the acrylic polymer obtained by polymerizing a monomer mixture containing (meth)acrylic ester monomers and functional group-containing monomers, may be reacted with a (meth)acryloyl group-containing compound having a reactive group capable of reacting with the functional group, and a (meth)acryloyl group to incorporate a (meth)acryloyl group into the acrylic polymer.

The polymer having a (meth)acryloyl group preferably has an acrylic backbone with structural units derived from (meth)acrylic ester as the main chain, as in the acrylic polymer described above, but the main chain does not necessarily need to have an acrylic backbone. The main chain is not required to have an acrylic backbone as long as it has a (meth)acryloyl group, and for example, may have a urethane backbone.

The curable resin composition preferably contains, as the above (meth)acrylic resin, a (meth)acrylic resin having a weight-average molecular weight (Mw) of 100,000 or more and 1,000,000, or less, being in solid form, and having a plurality of functional groups (hereinafter referred to as (meth)acrylic resin (A)). When the (meth)acrylic resin (A) has a weight-average molecular weight within the above range and is in solid form, the coating layer more readily retains a certain shape even before cured and is more easily formed appropriately on the transfer layer. Also, it becomes easier to impart tackiness, extensibility, and the like to the coating layer. When the coating layer has tackiness and extensibility, it tends to adhere to the object to be coated without any tear or the like occurring by vacuum forming or the like, thus enhancing vacuum formability. Furthermore, when the weight-average molecular weight is within the above range, the hardness of the coating layer after cured is more easily increased.

From the above viewpoint, the weight-average molecular weight of the (meth)acrylic resin (A) is preferably 150,000 or more and 500,000 or less, and more preferably 180,000 or more and 450,000 or less.

In the present specification, the weight-average molecular weight is measured by gel permeation chromatography (GPC) and is obtained as a value in terms of standard polystyrene. In addition, being in solid form means being solid at normal temperature (23°C) and normal pressure (1 atm). Similarly, being in liquid form means being liquid at normal temperature (23°C) and normal pressure (1 atm).

The glass transition temperature (Tg) of the (meth)acrylic resin (A) is preferably less than 90°C, more preferably 80°C or less, even more preferably 60°C or less, and preferably 0°C or more, more preferably 10°C or more. When the glass transition temperature of the (meth)acrylic resin (A) is within the above range, it is easier to impart a certain tackiness and extensibility to the coating layer.

In the present specification, the glass transition temperature is a value obtained by differential scanning calorimetry (DSC) in accordance with JIS K 7121.

The high molecular weight (meth)acrylic resin (A) described above is preferably at least one of a (meth)acrylic polyol having a plurality of hydroxy groups (hereinafter also referred to as (meth)acrylic polyol (A1)), or a polymer having (meth)acryloyl groups (hereinafter also referred to as polymer (A2)).

As described above, the (meth)acrylic polyol (A1) can be obtained, for example, by polymerizing a monomer mixture containing (meth)acrylic ester monomers and hydroxy group-containing monomers.

The hydroxyl value of the (meth)acrylic polyol (A1) is preferably 20 mg KOH/g or more and 200 mg KOH/g or less, and more preferably 30 mg KOH/g or more and 150 mg KOH/g or less. When the hydroxyl value is within the above range, the curability is enhanced and the coating layer more easily achieves high hardness after curing. The hydroxyl value can be measured in accordance with JIS K1557-1:2007.

The polymer (A2) preferably has (meth)acryloyl groups in a predetermined ratio, and specifically, the (meth)acryloyl group equivalent is preferably 100 g/mol or more and 10,000 g/mol or less, and more preferably 500 g/mol or more and 8,000 g/mol or less. When the (meth)acryloyl group equivalent is within the above range, the curability of the coating layer containing the polymer (A2) is enhanced and the coating layer more easily achieves high hardness after cured. The (meth)acryloyl group equivalent means the value obtained by dividing the weight-average molecular weight of the polymer by the number of (meth)acryloyl groups per molecule of the polymer.

The content of the (meth)acrylic resin (A) in the coating layer is not particularly limited, but is, for example, 18 mass% or more, preferably 19 mass% or more, and more preferably 20 mass% or more, based on the total amount of the curable resin composition. Containing the (meth)acrylic resin (A) in a certain amount or more allows to more easily enhance the coatability, curability, and the like of the curable resin composition.

In addition, the content of the (meth)acrylic resin (A) in the coating layer is not particularly limited, but is, for example, 60 mass% or less, preferably 55 mass% or less, and more preferably 50 mass% or less, based on the total amount of the curable resin composition. Decreasing the content of the (meth)acrylic resin (A) allows the tackiness of the curable resin composition to be more easily enhanced.

In the present specification, to be based on the total amount of the curable resin composition means considering the total amount of the components minus the solvating media as 100 mass%, when the curable resin composition contains a solvating media such as a solvent. That is, to be based on the total amount of the curable resin composition means to be based on the total amount of solid content of the curable resin composition.

The (meth)acrylic resin (A) may be used alone, or two or more may be used in combination.

The curable resin composition preferably contains, as a resin, a plasticizing resin (a) whose weight-average molecular weight is less than 100,000, in addition to the (meth)acrylic resin (A).

The plasticizing resin (a) used should be a resin that can plasticize the curable resin composition before cured and adjust the tack value of the coating layer to the desired range. As the plasticizing resin (a), a resin that is compatible with the (meth)acrylic resin (A) and, like the (meth)acrylic resin (A), has a functional group that is capable of being cured by heat or an active energy ray, is preferred. Examples of the resins used in the plasticizing resin (a) include (meth)acrylic resins, polycarbonate resins, polyester resins, epoxy resins, polyether resins, polyolefin resins, and plant-derived resins (such as castor oil); among these, (meth)acrylic resins or polycarbonate resins are preferred.

When the curable resin composition contains a plasticizing resin (a) in addition to the high molecular weight (meth)acrylic resin (A), the tackiness and coatability of the curable resin composition, the curability and extensibility of the coating layer, and the like are more easily enhanced in a balanced manner. The weight-average molecular weight of the plasticizing resin (a) is preferably 100 or more and 30,000 or less, and more preferably 300 or more and 20,000 or less.

It is desirable that the plasticizing resin (a) described above be liquid at 100% solid content. The plasticizing resin (a) is not required to have a glass transition temperature, but may have a glass transition temperature. When the plasticizing resin (a) has a glass transition temperature, it is not particularly limited, but it is preferably less than 0°C, more preferably -20°C or less, and even more preferably -40°C or less. The lower limit of the glass transition temperature is not particularly limited, but is, for example, -120°C or more, and preferably -100°C or more.

When the glass transition temperature of the plasticizing resin (a) is within the above range, the tensile elongation at break of the coating layer is more easily adjusted to a desired range, and tackiness is also more easily exhibited.

The plasticizing resin (a) is preferably at least one of a (meth)acrylic polyol or polycarbonate diol having a plurality of hydroxy groups (hereinafter also referred to as polyol (a1)), and a polymer having (meth)acryloyl groups (hereinafter also referred to as polymer (a2)).

The hydroxyl number of the (meth)acrylic polyol or polycarbonate diol (polyol (a1)) is preferably 20 mg KOH/g or more and 300 mg KOH/g or less, and more preferably 50 mg KOH/g or more and 250 mg KOH/g or less. When the hydroxyl value is within the above range, the curability is enhanced and the coating layer more easily achieves high hardness after cured.

The polymer (a2) having (meth)acryloyl groups has a (meth)acryloyl group equivalent of preferably 10 g/mol or more and 10,000 g/mol or less, and more preferably 100 g/mol or more and 8,000 g/mol or less. When the (meth)acryloyl group equivalent is within the above range, the curability is enhanced and the coating layer more easily achieves high hardness after cured.

The (meth)acrylic polyol or polycarbonate diol (polyol (a1)) is preferably used when the high molecular weight (meth)acrylic resin (A) is a (meth)acrylic polyol (A1). Using a (meth)acrylic polyol or polycarbonate diol (polyol (a1)) in combination with a (meth)acrylic polyol (A1) allows the curable resin composition to be more appropriately cured by heat.

In addition, the polymer (a2) is preferably used when the high molecular weight (meth)acrylic resin (A) is a polymer (A2) having (meth)acryloyl groups. Using the polymer (a2) in combination with a polymer (A2) allows the curable resin composition to be more appropriately cured by irradiation with an active energy ray, heating or the like.

The plasticizing resin (a) may be used alone, or two or more may be used in combination.

In the coating layer, the total content ratio of the plasticizing resin (a) and the blocked isocyanate (B) to the (meth)acrylic resin (A) (hereinafter also referred to as "(a+B)/A") is, for example, 0.8 or more, preferably 0.9 or more, and more preferably 1.0 or more. When (a+B)/A is a certain number or more, i.e., the plasticizing resin (a) and the blocked isocyanate (B) are contained in a certain amount or more, the curable resin composition can have a certain tack value or more, which allows the adhesiveness and the like to be enhanced.

In addition, (a+B)/A is, for example, 5 or less, preferably 4.5 or less, and more preferably 4 or less. When (a+B)/A is a certain number or less, the cured product of the curable resin composition can have a certain hardness or more, which allows to impart excellent scratch resistance.

When the curable resin composition contains a solvating media such as a solvent, (a+B)/A is the blending ratio based on the total amount of solid content described above. The same applies to a/A described below.

(Blocked isocyanate (B))

The curable resin composition of the present invention may contain a curing agent that cures the curable resin described above by reacting with it. The curing agent is preferably a thermosetting agent that reacts with the curable resin with heating. The thermosetting agent is preferably a blocked isocyanate (B) when a (meth)acrylic polyol (A1) is used. That is, the curable resin composition of the present invention preferably contains, in one embodiment, a (meth)acrylic polyol (A1) and a blocked isocyanate (B).

The blocked isocyanate (B) is a compound in which an isocyanate group is blocked by a protective group. Upon exposure to high temperatures, the protective group (blocked portion) comes off by thermal dissociation, and a curing reaction occurs between the isocyanate group generated and the (meth)acrylic polyol (A1) or (meth)acrylic polyol or polycarbonate diol (polyol (a1)) described above.

The blocked isocyanate (B) can be obtained, for example, by reacting an isocyanate compound having two or more isocyanate groups per molecule with a blocking agent.

The isocyanate compound having two or more isocyanate groups per molecule described above is not particularly limited, but examples thereof include tolylene diisocyanate, diphenylmethane diisocyanate, hexamethylene diisocyanate, pentamethylene diisocyanate, isophorone diisocyanate, xylylene diisocyanate, hydrogenated xylylene diisocyanate, and the modified forms thereof.

Examples of the blocking agent include pyrazoles, phenols, oximes, lactams, and active methylenes.

The blending amount of the blocked isocyanate (B) in the curable resin composition is preferably such that the ratio of the number of functional groups in the (meth)acrylic polyol (A1) to the number of isocyanate groups in the blocked isocyanate (B) (number of functional groups/number of isocyanate groups) is 0.4 or more and 2.5 or less, or 0.6 or more and 1.4 or less.

The content of the blocked isocyanate (B) is not particularly limited, but is preferably 20 mass% or more and 50 mass% or less, and more preferably 25 mass% or more and 45 mass% or less, based on the total amount of the curable resin composition.

(Radical polymerization initiator (C))

The curable resin composition of the present invention may contain a radical polymerization initiator (C) that generates radicals by heat or an active energy ray. In the curable resin composition, the radical polymerization initiator (C) is preferably used when a polymer (A2) having (meth)acryloyl groups is used. That is, the curable resin composition of the present invention preferably contains, in one embodiment, a polymer (A2) having (meth)acryloyl groups and a radical polymerization initiator (C).

Examples of a thermal radical polymerization initiator that generates radicals by heat include azo compounds and organic peroxides. Examples of azo compounds include 2,2'-azobis(2,4-dimethylvaleronitrile) and azobisisobutyronitrile. Examples of organic peroxides include benzoyl peroxide, ketone peroxide, peroxyketals, hydroperoxides, dialkyl peroxides, peroxyesters, diacyl peroxides, and peroxydicarbonate.

Examples of the photo-radical polymerization initiator that generates radicals by an active energy ray include benzophenone compounds, alkylphenone compounds, acetophenone compounds, acylphosphine oxide compounds, titanocene compounds, oxime ester compounds, benzoin ether compounds, and thioxanthone.

The radical polymerization initiator (C) is preferably a photo-radical polymerization initiator.

The content of the radical polymerization initiator (C) is preferably 0.01 mass% or more and 10 mass% or less, more preferably 0.1 mass% or more and 7 mass% or less, and even more preferably 0.2 mass% or more and 5 mass% or less, based on the total amount of the curable resin composition. Having the content of the radical polymerization initiator (C) within these ranges allows the curable resin composition to be cured with high curability by heating or irradiation with an active energy ray.

When the curable resin composition is a curable resin composition that is capable of being cured by moisture, a moisture-curing resin should be incorporated in the composition. Examples of the moisture-curing resin include prepolymers having isocyanate group(s) at their ends. Examples of prepolymers having isocyanate group(s) at their ends include those obtained by reacting a polyisocyanate with an active hydrogen-containing compound and/or active hydrogen-containing polymer.

The polyisocyanate used when preparing a prepolymer having isocyanate group(s) at its ends is tolylene diisocyanate, crude tolylene diisocyanate, diphenylmethane diisocyanate, polymethylene polyphenyl isocyanate, carbodiimide-modified diphenylmethane diisocyanate, phenylene diisocyanate, 1,5-naphthalene diisocyanate, xylylene diisocyanate, hexamethylene diisocyanate, or the like, and is preferably polymethylene polyphenyl isocyanate.

The aforementioned active hydrogen-containing compounds and active hydrogen-containing polymers used are, for example, as follows.

Active hydrogen-containing compounds such as ethylene glycol, diethylene glycol, propylene glycol, dipropylene glycol, glycerol, trimethylolethane, trimethylolpropane, castor oil, diglycerol, sorbitol, pentaerythritol, and dipentaerythritol, and active hydrogen-containing polymers having two or more terminal hydroxy groups, with an average molecular weight of 3,000 or less and an average number of functional groups of 2 or more, preferably an average molecular weight of 200 to 1,000 and an average number of functional groups of 2 to 2.5, obtained by addition polymerization of the above active hydrogen-containing compounds with one or a mixture of alkylene oxides such as ethylene oxide, propylene oxide, butylene oxide, styrene oxide, and tetrahydrofuran, are used. In addition, active hydrogen-containing polymers with an average molecular weight of 3,000 or less and an average number of functional groups of 1.5 or more, preferably an average molecular weight of 200 to 1,000 and an average number of functional groups of 2 to 2.5, such as polyester polyols, oil-modified polyester polyols, poly($\varepsilon$-caprolactone) polyols, polycarbonate diols, acrylic polyols, polyamines, polyamides, urea resins, and melamine resins, can also be used in combination.

The prepolymer having isocyanate group(s) at its ends has, for example, an effective NCO content of 1 to 15 mass%, preferably 8 to 13 mass%.

The prepolymer having isocyanate group(s) at its ends can be synthesized by performing a urethanization reaction of the above polyisocyanates and common polyols, including the above active hydrogen-containing polymers, in a moisture-shielded system at 40°C to 90°C, preferably 55°C to 75°C, with excess isocyanate.

The urethanization reaction described above is usually performed in an organic solvent, and such solvent includes ketone solvents such as methyl ethyl ketone, ester solvents such as ethyl acetate, aromatic solvents such as toluene and xylene, and other solvents generally used as a solvent for coating. A catalyst can also be used in the urethanization reaction, and such catalyst includes tertiary amine catalysts such as triethylamine and dimethylaniline, and metal catalysts such as tin and zinc. These also serve as catalysts when reacting with the moisture in the air during the formation of the coating film.

(Pigment (D))

The curable resin composition may contain a pigment (D). By incorporating a pigment (D) in the curable resin composition, the coating layer can be colored to form a colored layer, or glitter and the like can be imparted to the coating layer. Therefore, the aesthetic quality of the coating formed by the transfer-type resin sheet can be enhanced.

Examples of the pigment (D) include, but are not limited to, glitter pigments such as aluminum pigments like aluminum flakes and so on, mica pigments, graphite pigments, and glass flake pigments; metal oxide pigments such as titanium dioxide, iron oxide, and titan yellow; inorganic pigments such as carbon black, clay, kaolin, barium sulfate, barium carbonate, calcium carbonate, talc, silica, and white alumina; and organic pigments such as azo pigments, quinacridone pigments, diketopyrrolopyrrole pigments, perylene pigments, perinone pigments, benzimidazolone pigments, vat pigments, isoindoline pigments, isoindolinone pigments, azo-metal chelate pigments, phthalocyanine pigments, indanthrone pigments, dioxane pigments, and indigo pigments.

The content of the active ingredient of the pigment (D) in the coating layer, i.e. the pigment component excluding the binder resin, dispersant, and additives, is, for example, 0.1 mass% or more and 50 mass% or less, preferably 0.5 mass% or more and 40 mass% or less, and even more preferably 1 mass% or more and 30 mass% or less, based on the total amount of the curable resin composition. When the content of the pigment (D) is these lower limit values or more, the coating formed by the transfer-type resin sheet can be appropriately colored, or glitter and the like can be appropriately imparted to the coating. When the content of the pigment (D) is the above upper limit value or less, various performances such as shape retention, curability, extensibility, and tackiness of the coating layer can be prevented from being degraded by the pigment (D).

The curable resin composition may contain a coloring agent other than the pigment (D), and may contain a dye. As a dye, a known dye can be used, including azo dyes, anthraquinone dyes, indigoid dyes, and stilbene dyes.

In addition, the curable resin composition may contain a component other than the above, and for example, may contain an additive other than the above. Examples of additives include adhesion-imparting agents, urethane reaction catalysts, urethane reaction modifiers, defoaming agents, surface modifiers, wax additives, cross-linking agents, dispersants, inorganic fillers other than pigments, age resistors, antioxidants, ultraviolet absorbers, and anti-rust agents.

The coating layer may have a single layer structure or may have a multilayer structure. When it has a single layer structure, the coating layer should consist of one layer formed of the above curable resin composition. When it has a multilayer structure, each layer should be formed of the curable resin composition described above. When it has a multilayer structure, for example, it may be composed by laminating a plurality of layers formed of the above curable resin composition where adjacent layers have different compositions from each other. When it has a multilayer structure, the coating layer may include, for example, at least one of a colored layer containing either a pigment or a coloring agent other than a pigment, and a clear layer containing neither pigments nor coloring agents other than pigments, but it preferably includes a colored layer and a clear layer. When a colored layer and a clear layer are provided, the clear layer and the colored layer should be arranged in this order from the transfer layer side. With such layer configuration, when the transfer-type resin sheet is attached to the adherend, the colored layer and the clear layer will be arranged in this order from the adherend side.

When the coating layer has a colored layer as described above, the adherend can be colored by the coating formed by the coating layer. In addition, adding a clear layer in addition to the colored layer allows the colored layer to be protected and gloss to be imparted to the colored layer.

The clear layer is a transparent layer, which should be transparent to the extent that the color of the colored layer can be visible from the outside through the clear layer, but for example, its transmittance of light at a wavelength of 450 nm should be 80% or more. The clear layer should be a coating film free of coloring agent, but may contain a small amount of coloring agent as long as it does not impair its function. When a (meth)acrylic resin is used as the curable resin, the curable resin composition for the clear layer should contain at least a high molecular weight (meth)acrylic resin, in which case a plasticizing resin may or may not be contained.

Of course, when the coating layer has a multilayer structure, it is not limited to a twolayer structure of a clear layer and a colored layer, and can have various laminate structures. It may have a structure of three or more layers with two or more colored layers and one or more clear layers, or it may omit the clear layer and include two colored layers. Two or more clear layers may also be provided. It may also be a structure of three or more layers with a thermal barrier layer or the like provided between the clear layer and the colored layer.

The thickness of the coating layer is not particularly limited, but is, for example, about 5 $\mu$m or more and 1,000 $\mu$m or less, preferably 10 $\mu$m or more and 500 $\mu$m or less.

In addition, when a colored layer and a clear layer are provided in the coating layer, the thickness of the colored layer is not particularly limited, but is, for example, 10 $\mu$m or more and 100 $\mu$m or less, preferably 15 $\mu$m or more and 50 $\mu$m or less. The thickness of the clear layer is also not particularly limited, but is, for example, 10 $\mu$m or more and 100 $\mu$m or less, preferably 15 $\mu$m or more and 50 $\mu$m or less.

The curable resin composition constituting the coating layer should be in an uncured or semi-cured state. An uncured or semi-cured state refers to a state in which curing further progresses when the coating layer is heated or irradiated with an active energy ray. The semi-cured state refers to a state in which the curable resin composition is partially cured, while the uncured state refers to a state in which the curable resin composition is not cured.

<Transfer layer>

In the transfer-type resin sheet of the present invention, the transfer layer serves as a support when the coating layer is transferred to an adherend, such as a car body. The transfer layer preferably has a tensile elongation at break at 120°C in both MD and TD of 500% or more. When the tensile elongations at break of the transfer layer in MD and TD are both 500% or more, the transfer-type resin sheet more easily conforms to the shape of the object to be coated when the transfer-type resin sheet is attached to the object to be coated by vacuum forming or the like, the occurrence of breakage, wrinkling, and the like is more easily prevented, and the transfer-type resin sheet is more easily appropriately adhered to the object to be coated.

From the viewpoint of allowing the transfer-type resin sheet to adhere more appropriately to the object to be coated with excellent vacuum formability, the tensile elongations at break of the transfer layer at 120°C in MD and TD are both preferably 600% or more, and even more preferably both 700% or more.

The upper limit of the tensile elongation at break at 120°C is not particularly limited, but the tensile elongation at break at 120°C in MD and TD may be, for example, 3,000% or less.

The transfer layer preferably has a tensile elongation at break at 100°C in both MD and TD of 500% or more. When the tensile elongations at break of the transfer layer in MD and TD are both 500% or more, the transfer-type resin sheet more easily conforms to the shape of the object to be coated when the transfer-type resin sheet is attached to the object to be coated by vacuum forming or the like, the occurrence of breakage, wrinkling, and the like is more easily prevented, and the transfer-type resin sheet is more easily appropriately adhered to the object to be coated.

From the viewpoint of allowing the transfer-type resin sheet to adhere more appropriately to the object to be coated with excellent vacuum formability, the tensile elongations at break of the transfer layer at 100°C in MD and TD are both preferably 600% or more, and even more preferably both 700% or more.

The upper limit of the tensile elongation at break at 100°C is not particularly limited, but the tensile elongation at break at 120°C in MD and TD may be, for example, 3,000% or less.

The transfer layer should have a tensile elongation at break in both MD and TD within the above ranges at least one of 100°C and 120°C. For example, when the temperature of vacuum forming is relatively high, the tensile elongations at break in MD and TD should be within the ranges described above at 120°C, and when the temperature of vacuum forming is relatively low, the tensile elongations at break in MD and TD should be within the ranges described above at 100°C.

The tensile elongations at break at 100°C and 120°C of the transfer layer are the elongation at the break point measured in a tensile test of the film constituting the transfer layer, and can be measured by a measurement method in accordance with JIS K7127.

The tensile elongations at break at 100°C and 120°C of the transfer layer can be appropriately adjusted according to the type of resin constituting the transfer layer, whether the resin film constituting the transfer layer is stretched or not, the degree of stretching and the like.

The transfer layer is composed of a thermoplastic resin. Using a thermoplastic resin as the transfer layer allows the tensile elongation at break at temperature of at least one of 100°C and 120°C to be increased, and the transfer-type resin sheet to better conform to the shape of the object to be coated when the transfer-type resin sheet is attached to the object to be coated. Also, it becomes easier to prevent the occurrence of breakage, wrinkling, and the like, and becomes easier to more appropriately adhere the transfer-type resin sheet to the object to be coated. Specific examples of thermoplastic resins include cyclic polyolefin resins, polyolefin resins, polyester resins, polyamide resins, acrylonitrile butadiene styrene resins, polycarbonate resins, acrylic resins, fluororesins, polyvinyl chloride resins, polymethylpentene resins, and tetrafluoroethylene resins. Using these resins allows the tensile elongation at break described above to be increased.

Cyclic polyolefin resins are polymers containing structural units derived from cyclic olefins. Examples of cyclic olefins include tetracyclododecene, norbornene, and cyclic conjugated diene. The cyclic polyolefin resin may be a polymer of a cyclic olefin, a copolymer of a cyclic olefin and an $\alpha$-olefin, or a hydrogenated product thereof. Examples of the above $\alpha$-olefin include chain $\alpha$-olefins having about 1 or more and 12 or less carbon atoms, such as ethylene, propylene, butene-1, pentene-1, hexene-1, heptene-1, and octene-1; among these, ethylene is preferred.

The polyolefin resin is a polyolefin resin other than a cyclic polyolefin resin, and specific examples include polypropylene resins and polyethylene resins. Of these, polypropylene resins are preferred.

The polypropylene resin may be homopropylene, or a copolymer of a propylene, such as random polypropylene, and a small amount (e.g., 10 mass% or less) of another $\alpha$-olefin. Examples of other $\alpha$-olefins include chain $\alpha$-olefins having 1 or more and 12 or less carbon atoms, such as ethylene, 1-butene, 1-pentene, 4-methyl-1-pentene, 1-hexene, 1-octene, 1-nonene, and 1-decene.

Examples of polyethylene resins include low-density polyethylene (LDPE, density: less than 0.930 g/cm$^3$), medium-density polyethylene (MDPE, density: 0.930 g/cm$^3$ or more and less than 0.942 g/cm$^3$), high-density polyethylene (HDPE, density: 0.942 g/cm$^3$ or more), and linear low-density polyethylene (LLDPE).

The polyester resin is not particularly limited, but examples thereof include polybutylene terephthalate (PBT). The polybutylene terephthalate resin may be a homopolymer including terephthalic acid units and 1,4-butanediol units, or a copolymer containing units derived from copolymerization components other than terephthalic acid and 1,4-butanediol units. Examples of other copolymerization components include diol components and dicarboxylic acid components, which may be contained, for example, at a ratio of 30 mol% or less of all the units constituting the copolymer.

The resin film may be a monolayer film consisting of one single layer, or a multilayer film including two or more layers. In the resin film constituting the transfer layer, the resin contained in the resin film may be used alone, or two or more thereof may be used in combination. When two or more resins are used in combination, a different type of resin may be used in each layer to form a multilayer film. A monolayer film may be formed by a mixture of two or more resins, or one or more layers may be formed in a multilayer film.

Of the above, one or more resins selected from the group consisting of cyclic polyolefin resins, polyolefin resins, and polyester resins are preferred as the resin to be used in the resin film.

Of these, one or more resins selected from the group consisting of cyclic polyolefin resins, polypropylene resins, and PBT resins are more preferred. By the use of these resins, it becomes easier to increase the solvent resistance of the transfer layer and it gets to be able to prevent the transfer layer from degrading even when the curable resin composition is diluted with a solvent and coated directly on the transfer layer. From these viewpoints, the resin to be used in the resin film is even more preferably one or more resins selected from the group consisting of cyclic polyolefin resins and polypropylene resins, and still more preferably a cyclic polyolefin resin.

In the case of a multilayer film, it may be composed of a resin layer in which the contained resin is composed of at least one resin selected from the group consisting of cyclic polyolefin resins, polypropylene resins, and PBT resins (also referred to as the first layer), and a resin layer in which the contained resin is composed of a polyolefin resin such as a polyethylene resin (also referred to as the second layer). For example, a multilayer film in which a first layer that serves as a skin layer is provided on one or both sides of a second layer, is also preferred, and specifically, a multilayer film in which a first layer composed of a PBT resin is provided on one or both sides of a second layer composed of a polyethylene resin, is preferred. In this case, it is more preferable that the first layer (skin layer) be provided on both sides of the second layer (core layer). When the first layer is provided only on one side of the second resin layer, the first layer should be placed on the coating layer side.

Each layer in the transfer layer may contain additives in addition to the resin. The additives should be known additives to be blended in resin films. Specific examples of additives include crystal nucleating agents, fluorescent brightening agents, antioxidants, stabilizers, ultraviolet absorbers, surfactants, lubricants, fillers, cross-linking agents, cross-linking promoters, antistatic agents, flame retardants, dispersants, pigments, dyes, and processing aids.

The resin film constituting the transfer layer may be a stretched film, such as an uniaxially or biaxially stretched film, or may be a non-stretched film, but is preferably a non-stretched film. When a stretched film is used, a stretched film with a low stretching ratio should be used. Using a non-stretched film or a stretched film with a low stretching ratio for the resin film allows to increase the tensile elongation at break. The resin film may be a T-die film extruded by a T-die or an inflation film.

The transfer layer may have at least one surface that has undergone a mold release treatment with a mold release agent such as a silicone-based mold release agent, a non-silicone-based (organic mold release agent) mold release agent, or a fluorine-based release agent. When the transfer layer has undergone a mold release treatment, the treated surface preferably constitutes the surface on the coating layer side. By undergoing a mold release treatment, the transfer layer has enhanced peelability from the coating layer.

The thickness of the transfer layer is not particularly limited, but is, for example, 30 $\mu$m or more and 300 $\mu$m or less, preferably 50 $\mu$m or more and 200 $\mu$m or less.

[Layer configuration]

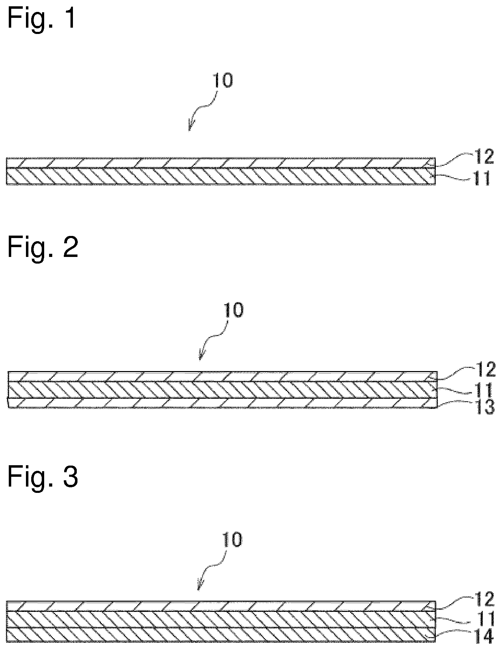

As shown in Fig. 1, the transfer-type resin sheet 10, for example, includes a coating layer 11 and a transfer layer 12, where the coating layer 11 is formed on one side of the transfer layer 12 and these are integrated. The coating layer 11 should be laminated directly on top of the transfer layer 12.

The transfer-type resin sheet 10 may consist of a coating layer 11 and a transfer layer 12 as shown in Fig. 1, but it may also include other layers. For example, as shown in Fig. 2, the transfer-type resin sheet 10 may include a mold release film 13, and the mold release film 13 may be attached to the surface of the coating layer 11. The mold release film 13 is not particularly limited as long as a known mold release film is used, but may include a resin film, or may be a resin film in which at least one surface has undergone a mold release treatment with a mold release agent such as a silicone-based mold release agent, a non-silicone-based mold release agent (organic mold release agent), or fluorine-based mold release agent. When the mold release film 13 has undergone a mold release treatment, the treated surface should be positioned in contact with the coating layer 11. The mold release film 13 should be peeled off from the coating layer 11 to be removed from the transfer-type resin sheet 10 before attaching the transfer-type resin sheet 10 to the object to be coated.

In addition, as shown in Fig. 3, the transfer-type resin sheet 10 may include a support layer 14, which may be attached to the surface of the coating layer 11. The support layer 14 should be formed by a resin, rubber, or the like. The surface of the support layer 14 that comes into contact with the coating layer 11 may also have undergone a mold release treatment, in the same manner as the mold release film.

(Method for producing transfer-type resin sheet)

The method for producing the transfer-type resin sheet in the present invention is not particularly limited, but it is preferable to produce it by preparing a coating solution in which the curable resin composition is diluted with a solvent, applying it on the transfer layer constituted by a resin film or the like, and then drying it. The coating solution is not particularly limited, but may be obtained, for example, by mixing each component constituting the curable resin composition, such as the curable resin, curing agent, radical polymerization initiator, pigment, and additives other than these, in a solvent.

Examples of the above solvent include ethyl acetate, butyl acetate, and toluene, but ethyl acetate is preferred from the viewpoint of ease of obtaining the desired transfer-type resin sheet, work efficiency, and the like. The amount of solvent used is not particularly limited, but is, for example, 50 parts by mass or more and 1,000 parts by mass or less, and preferably about 100 parts by mass or more and 500 parts by mass or less per 100 parts by mass of the curable resin such as the (meth)acrylic resin.

The method for applying the coating solution to the transfer layer is not particularly limited and it may be applied on the transfer layer using a known coating device.

The drying temperature in the pre-drying step is preferably 50°C or more and 70°C or less, and more preferably 55°C or more and 65°C or less. The drying time in the pre-drying step is preferably 10 minutes or more and 60 minutes or less, and more preferably 15 minutes or more and 45 minutes or less.

The drying temperature in the main drying step is preferably 85°C or more and 130°C or less, and more preferably 90°C or more and 120°C or less. When the drying temperature is these lower limit values or more, the solvent is more readily appropriately removed from the coating solution, which prevents bubbles from being generated due to the vaporization of the solvent and the like when curing the coating layer. When the drying temperature is the above upper limit values or less, the curable resin composition can be prevented from being cured more than necessary when drying.

The drying time in the main drying step is preferably 10 minutes or more and 60 minutes or less, and more preferably 15 minutes or more and 45 minutes or less. When the drying time is the above lower limit values or more, the solvent is more readily appropriately removed from the coating solution, which prevents bubbles from being generated due to the vaporization of the solvent when curing the coating layer or the like. When the drying temperature is the above upper limit values or less, the curable resin composition can be prevented from being cured more than necessary when drying.

Initial curing may also be performed on the transfer-type resin sheet after drying, as necessary. Initial curing refers to the curing of the curable resin composition constituting the coating layer to a semi-cured state. The initial curing may be performed by heating, by irradiation with an active energy ray, or by moisture. When performed by heating, it should be performed with a heating temperature of 135°C or more and 150°C or less and a heating time of 5 minutes or more and 10 minutes or less.

(Method for using transfer-type resin sheet)

The transfer-type resin sheet in the present invention is used to form a coating on various articles (objects to be coated). Specifically, after attaching the transfer-type resin sheet to various objects to be coated, the coating layer should be cured, and the cured coating layer may be used as a coating. The transfer layer should be peeled off from the coating layer attached to the object to be coated to be removed from the object to be coated.

The object to be coated which is coated by the transfer-type resin sheet is not particularly limited, but examples thereof include electrical appliances. Also included are interior materials for vehicles, such as automobile and railway vehicle interior materials, exterior materials for vehicles, such as automobile and railway vehicle exterior materials, and miscellaneous goods. Furthermore, exterior materials for heavy machinery, ships, and aircrafts; exterior wall and roofing materials for houses and buildings; and bridges, steel frames, plants, and wind turbine blades are also included. Of these, exterior materials for vehicles such as automobile exterior materials are preferred. Examples of exterior materials for vehicles include hoods, roofs, door panels, bumpers, fuel neck filler panels, trunk lids, and rear gates. When attached to exterior materials for vehicles, the transfer-type resin sheet may be attached to the exterior material attached to the vehicle body or to the exterior material before it is attached to the vehicle body.

The material of the object to be coated is not particularly limited, and may be any of a resin material, inorganic material such as ceramic, or metallic material such as steel, but of these, a metallic material such as steel is preferred. Metallic materials such as steel are difficult to coat with resin sheets as it is difficult to coat them at the same time as the object to be coated is formed by insert molding. However, by using the transfer-type resin sheet of the present invention, such materials can also be easily coated.

The method for attaching the transfer-type resin sheet to the object to be coated is not particularly limited, and may be performed by hand application using a squeegee or the like, or by using a laminating device. It may also be performed by press molding, insert injection, vacuum forming, or the like, among which the method of attaching by vacuum forming is preferred. When attaching by vacuum forming, the transfer-type resin sheet should be heated, for example, to 90°C or more and 130°C or less, preferably 100°C or more and 125°C or less before vacuum forming.

The transfer-type resin sheet may be preformed by vacuum forming, press molding, pressure molding, or the like into a shape that corresponds to the shape of the object to be coated before being attached to the object to be coated. When preforming, the curable resin sheet is preferably preformed with the support layer 14 attached to the coating layer 11 as shown in Fig. 3. Preforming is performed by using a jig to shape the transfer-type resin sheet into a certain shape, but by preforming the transfer-type resin sheet with a support layer, it becomes to be able to prevent the coating layer from attaching to the jig.

Of the above, preforming is preferably performed by vacuum forming. In addition, the preformed transfer-type resin sheet should be attached to the object to be coated after the support layer has been removed. Here, the transfer-type resin sheet may be attached to the object to be coated by hand application, using a laminating device, or by another method.

The transfer-type resin sheet attached to the object to be coated as described above should have the coating layer cured. The curing of the coating layer should be performed by heating when the curable resin composition is capable of being cured by heat. When curing by heating, the heating temperature is not particularly limited as long as the coating layer can be cured, but is, for example, 135°C or more and 170°C or less, and preferably 140°C or more and 160°C or less. The heating time is, for example, 30 minutes or more and 90 minutes or less, and preferably 60 minutes or more and 90 minutes or less.

In addition, when the curable resin composition is capable of being cured by an active energy ray, the curing should be performed by irradiating the coating layer with an active energy ray. As an active energy ray, ultraviolet (UV) rays are preferably used from the viewpoint of curability and convenience. The amount of active energy ray irradiated is not particularly limited, but is, for example, 200 mJ/cm$^2$ or more and 5,000 mJ/cm$^2$ or less, and preferably 500 mJ/cm$^2$ or more and 2,000 mJ/cm$^2$ or less.

In addition, when the curable resin composition is capable of being cured by moisture, the curing should be performed by moisture.

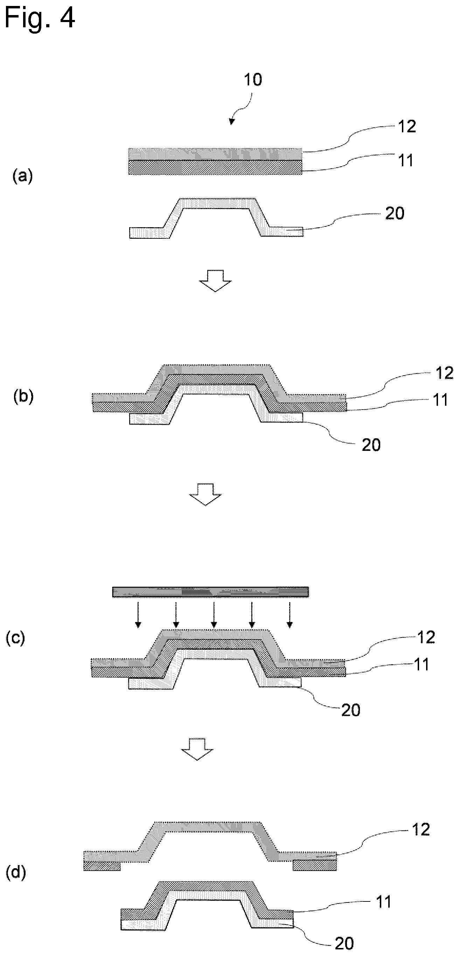

The transfer-type resin sheet has enhanced vacuum formability when the transfer layer has the tensile strength at break. Therefore, the transfer-type resin sheet is preferably attached to the object to be coated by vacuum forming. It is also preferably attached to the object to be coated after preforming by vacuum forming. Hereinafter, the method for attaching the transfer-type resin sheet to the object to be coated to form a coating on the object to be coated will be described in more detail with reference to Fig.4.

First, an object to be coated 20 should be prepared, and the transfer-type resin sheet 10 should be attached to the object to be coated 20 by vacuum forming as shown in Figs. 4(a) and (b). Here, the transfer-type resin sheet 10 is attached to the object to be coated 20 so that the coating layer 11 is in contact with the object to be coated 20. The transfer-type resin sheet 10 should also be adhered to the object to be coated 20 while being stretched and formed to follow the shape of the object to be coated 20 by vacuum forming.

Here, the vacuum forming is preferably TOM forming. TOM is a "Three dimension Overlay Method," and when TOM forming is applied, the transfer-type resin sheet 10 can be adhered and attached even along the shape of an object to be coated 20 with an intricately shaped surface.

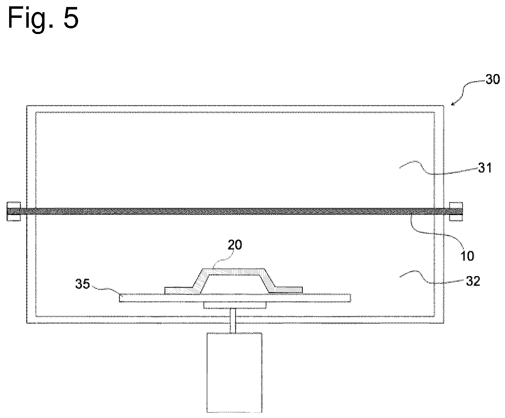

A schematic view of a device to perform TOM forming is shown in Fig. 5. The transfer-type resin sheet 10 is set inside a TOM forming device 30, with an upper box 31 provided above the transfer-type resin sheet 10 and a lower box 32 provided below the transfer-type resin sheet 10. In the lower box 32, the object to be coated 20 is placed on a vertical lifting table 35. In the transfer-type resin sheet 10, the coating layer is placed on the bottom and the transfer layer on the top.

In this way, the upper box 31 and the lower box 32 are depressurized and the transfer-type resin sheet 10 is heated by a near-infrared heater or the like. Next, the object to be coated 20 is raised by the vertical lifting table 35, the object to be coated 20 and the transfer-type resin sheet 10 are pressed together, and then compressed air is introduced only into the upper box 11 and held for a certain period of time to attach the transfer-type resin sheet 10 to the surface of the object to be coated 20, which allows to attach the transfer-type resin sheet 10 on the object to be coated 20. Of course, a vacuum forming other than TOM forming may also be applied.

When the transfer-type resin sheet 10 is attached to the object to be coated 20, the coating layer 11 is then cured and a coating is formed on the object to be coated 20 by the cured coating layer 11, as shown in Fig. 4(c). The coating layer 11 may be cured by heating, by irradiation with an active energy ray, or by moisture. Details of the conditions for the heating and irradiation of active energy rays are as described above.

Then, the transfer layer 12 should be peeled off from the coating layer 11 to remove the transfer layer 12 from the object to be coated 20, as shown in Fig. 4(d). However, the transfer layer 12 may be removed from the object to be coated 20 by peeling it off from the coating layer 11 before curing. As shown in Fig. 4(d), the coating layer 11 may be so-called trimmed, i.e., unnecessary portions may be cut as appropriate.

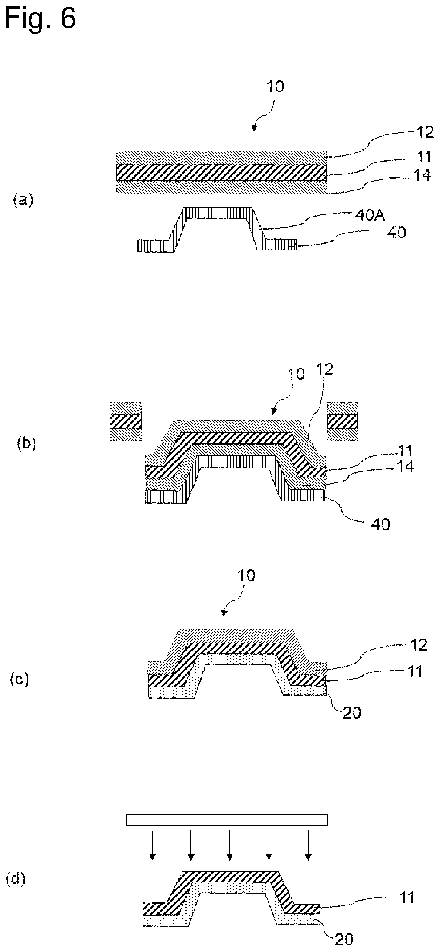

Next, an example of the method for forming a coating using a transfer-type resin sheet preformed by vacuum forming will be described in detail with reference to Fig.6. In the case of preforming, for example, a transfer-type resin sheet 10 having a support layer 14, in which the support layer 14 is attached to the surface of the coating layer 11 is prepared, and furthermore a jig 40 is also prepared, as shown in Fig. 6(a). The jig 40 should have a surface 40A that matches the surface shape of the object to be coated 20. The jig 40 may be made of any material and may be formed by a resin material or by a metal.

The transfer-type resin sheet 10 with the support layer 14 is placed on the jig 40 so that the side of the support layer 14 is on the side of the surface 40A of the jig 40, and as shown in Fig. 6(b), the transfer-type resin sheet 10 should be adhered to the jig 40 by vacuum forming and formed into a shape corresponding to the surface shape of the object to be coated 20 while stretching the transfer-type resin sheet 10. The conditions for vacuum forming are as described above. While the vacuum forming is preferably performed by TOM forming, it may also be performed by a forming other than TOM forming. The specific method of TOM forming is as described above, but a jig 40 should be placed instead of the object to be coated 20 in the TOM forming device 30.

As shown in Fig. 6(b), the preformed transfer-type resin sheet 10 may be so-called trimmed, i.e., unnecessary portions may be cut as appropriate.

The preformed transfer-type resin sheet 10 should then be removed from the jig 40 as shown in Figs. 6(b) and (c), and the support layer 14 should be removed from the transfer-type resin sheet 10.

The transfer-type resin sheet 10, which has been preformed and from which the support layer 14 has been removed, is attached to the object to be coated 20, as shown in Fig. 6(c). Here, the method for attaching the transfer-type resin sheet 10 to the object to be coated 20 is not particularly limited, and may be performed by hand application using a squeegee or the like, or by laminating using a laminating device. As the transfer-type resin sheet 10 is preformed into the shape corresponding to the surface shape of the object to be coated 20, it can also be easily attached to the object to be coated 20 by hand application or the like.

When the transfer-type resin sheet 10 is attached to the object to be coated 20, the coating layer 11 is then cured and a coating is formed on the object to be coated 20 by the coating layer 11, as shown in Fig. 6(d). The coating layer 11 may be cured by heating, by irradiation with an active energy ray, or by moisture. Details of the conditions for the heating and irradiation of active energy rays are as described above. In addition, the transfer layer 12 should be peeled off from the coating layer 11 to remove the transfer layer 12 from the object to be coated 20. The transfer layer 12 may be removed before curing the coating layer 11, but is preferably removed after curing.

Examples

Hereinafter, the present invention will be further described in detail by Examples, but the present invention is not limited by these Examples in any way.

The measurement and evaluation methods in the present invention are as follows.

<Tack value of coating layer>

The tack value of coating layer was measured by the following procedure. Specifically, the transfer-type curable resin for coating was set in a probe tack tester (TA-500 manufactured by UBM) so that the transfer-type curable resin on the adhesive surface was in contact with the probe. Measurements were taken under the following conditions, and the maximum load when peeling off was evaluated as the tack value.
Probe diameter: 5 mm, speed: 10 mm/s, contact load: 100 gf, contact time: 1 s

<Tensile elongation at break of transfer layer>

The tensile elongation at break of the transfer layer was measured by a measurement method in accordance with JIS K7127. Specifically, the film used for the transfer layer was cut into a dumbbell shape with a width of 10 mm and a gauge width of 25 mm, and then attached to a tensile tester. Examples 1 to 8 and Comparative Examples 1 and 2 were pulled at a tensile speed of 100 mm/min in a thermostatic chamber set at 120°C, and the tensile elongation was calculated from the displacement at the point where the film broke, using the following equation. In addition, Examples 9 to 12 and Comparative Examples 3 and 4 were pulled at a tensile speed of 100 mm/min in a thermostatic chamber set at 100°C, and the tensile elongation was calculated from the displacement at the point where the film broke, using the following equation. The jig width was the same as the gauge width. The tensile elongation at break of the transfer layer was measured in both MD and TD.

$$\text{Tensile elongation } (\%) = (\text{displacement at break / gauge width}) \times 100$$

<Scratch resistance>

The scratch resistance was measured using a pencil scratch in accordance with JIS K5600-5-4.

Specifically, measurement samples were prepared according to the following procedure. In Example 7, the prepared transfer-type resin sheet was attached to a baked coating plate, cured by an ultraviolet irradiation device using a 365 nm LED lamp at 3,000 mJ/cm$^2$, and then the transfer film was peeled off to obtain an evaluation sample. In the Examples other than Example 7, the transfer-type resin sheet was attached to the baked coating plate, the transfer film was peeled off, and the coating layer was transferred to the baked coating plate before placing the baked coating plate in a 160°C oven for 1 hour to cure it with heat.

A pencil was applied to the surface of the cured coating layer at an angle of 45° with a load of 1 kg, and after scratching it for 10 mm, the degree of scratching was determined and indicated by the highest pencil hardness that did not leave a scratch. The pencils used were "Mitsubishi Pencil uni (manufactured by Mitsubishi Pencil) certified by the Japan Paint Inspection and Testing Association".

<Adhesiveness>

The adhesiveness was evaluated according to the following procedure. First, the baked coating plate was sprayed with water containing 0.5% of a polyalkyl ether surfactant. Then, the transfer-type resin sheet was arranged in the direction where the adhesive surface of the transfer-type resin sheet overlapped with the baked coating plate, and then rubbed using a squeegee over the transfer layer to press it while removing water. After pressing, the adhesiveness was evaluated by the peeling behavior when the transfer layer was detached.

A: The coating layer had no floating, detachment, or the like, and could be attached successfully.
B: Floating, detachment, or the like occurred on the coating layer, which could not be attached successfully.

<Vacuum formability>

The transfer-type resin sheets prepared in each Example and Comparative Example were evaluated for their vacuum formability by TOM forming, as shown below.

The object to be coated (Test Piece Car Shape manufactured by ASONE) was placed on the vertical lifting table provided in the TOM forming machine (product name "NGF-0709-S" manufactured by Fu-se Vacuum Forming Ltd.) including an upper box and a lower box. The curable resin sheet was then set in the sheet clamping frame provided on the forming machine, with the coating layer on the bottom and the transfer layer on the top. The vacuum in the upper and lower boxes was then reduced to a gauge pressure of 0.0 kPa or less, and the transfer-type resin sheet was heated until reaching a temperature of 120°C. However, in Examples 9 to 12 and Comparative Examples 3 and 4, the transfer-type resin sheet was heated until reaching a temperature of 100°C. The object to be coated was then raised and the object to be coated and the transfer-type resin sheet were pressed together, after which compressed air was introduced only into the upper box and retained for 5 seconds. The top and bottom boxes were opened to atmospheric pressure to obtain a laminate including the object to be coated and the transfer-type resin sheet. The obtained laminate was observed, and vacuum formability was evaluated according to the following criteria.

A: The transfer-type resin sheet conformed to the three-dimensional shape of the object to be coated and adhered evenly.
B: The transfer-type resin sheet could not conform to the three-dimensional shape of the object to be coated, and the sheet broke. Alternatively, wrinkles occurred throughout the sheet.

- : The transfer-type resin sheet was deformed and could not be fixed with the sheet clamp of the forming machine, thus making any evaluation impossible.

The components used in the Examples and Comparative Examples and the films used for the transfer layer are as follows.

<(Meth)acrylic resin (A) and plasticizing resin (a)>

The acrylic polyols, reactive polymers containing acryloyl groups, and polycarbonate diols used were as listed in Table 1 below.

[Table 1]

| No. | Resin | NV (mass%) | Tg (°C) | Hydroxyl value (mg KOH/g) | Acryloyl equivalent (g/mol) | Mw | Solvent |
|---|---|---|---|---|---|---|---|
| A1 | Acrylic polyol | 30 | 40 | 80 | 0 | 300000 | Ethyl acetate |
| A2 | Reactive polymer containing acryloyl groups | 30 | 35 | 0 | 1600 | 380000 | Ethyl acetate |
| a1-(1) | Acrylic polyol | 100 | -50 | 120 | 0 | 2500 | - |
| a1-(2) | Polycarbonate diol | 100 | None | 224 | 0 | 500 | - |
| a2 | Reactive polymer containing acryloyl groups | 100 | -50 | 0 | 4545 | 10000 | - |

<Blocked isocyanate (B)>

Hexamethylene diisocyanate blocked isocyanate (HDI-based), "Takenate B-882N" manufactured by Mitsui Chemicals, blocking agent type: 2-butanone oxime (MEKO), NV = 70%, solvent: petroleum naphtha, containing a small amount of urethanization catalyst

<Photo-radical polymerization initiator (C)>

Acetophenone compound, "Omnirad 1173" (NV = 100 mass%) manufactured by BASF

<Pigment (D)>

Pigment dispersion "NSP-UP 841B" manufactured by NIKKO BICS, effective pigment concentration = 9 mass%, NV = 24 mass%.

<Film for transfer layer>

Non-stretched cyclic polyolefin film ("Decofit Q16CK" manufactured by Toray Industries, thickness: 100 μm)
Non-stretched multilayer polybutylene terephthalate film
Non-stretched multilayer olefin film 1 ("Convini PP" manufactured by Okamoto Industries, thickness: 100 μm)
Non-stretched multilayer olefin film 2 ("Convini PE" manufactured by Okamoto Industries, thickness: 100 μm)
Non-stretched polyethylene terephthalate film ("Kaneron KA-20" manufactured by Shinei Kasei, thickness: 100 μm)
Biaxially stretched polyethylene terephthalate film ("COSMOPEEL E7004" manufactured by TOYOBO)

[Example 1]

A coating solution of the curable resin composition was prepared by mixing 71 parts by mass of the acrylic polyol (A1), 9 parts by mass of the acrylic polyol (a1-(1)), and 20 parts by mass of the blocked isocyanate (B) while stirring well, according to the formulation described in Table 2.
This coating solution was applied with an applicator to the smooth side of the non-stretched cyclic polyolefin film ("Decofit Q16CK" manufactured by Toray Industries) constituting the transfer layer. Next, a pre-drying step was performed at a drying temperature of 60°C and a drying time of 30 minutes, followed by a main drying step at a drying temperature of 90°C and a drying time of 30 minutes to obtain a transfer-type resin sheet with a 50 μm thick coating layer formed on the transfer layer. In the above drying step, the solvent was removed from the coating solution, resulting in the obtained coating layer having the formulation described in Table 3.

[Examples 2 to 5, 7, and 8, and Comparative Examples 1 and 2]

The transfer-type resin sheets were obtained in the same manner as in Example 1 except that the formulation of the curable resin compositions used for the coating solution and the films used for the transfer layer were changed as described in Table 2. In Example 5, the pigment listed in Table 1 was also blended to prepare the transfer-type resin sheet.

[Example 6]

The transfer-type curable resin sheet for coating was prepared by the same method as Example 1, except that a non-stretched multilayer polybutylene terephthalate film was used as the transfer layer film, and the formulation of the curable resin composition used for the coating solution was changed as described in Table 2. The non-stretched multilayer polybutylene terephthalate film was prepared according to the following procedure.
The raw materials for the skin layer were prepared according to the following procedure. 100 parts by mass of polybutylene terephthalate resin (product name "Novaduran 5010CS" manufactured by Mitsubishi Engineering-Plastics Corporation) and 5 parts by mass of a crystal nucleating agent (bis(4-methylbenzylidene)sorbitol, $T_m$ = 200°C (product name: GEL ALL E-200, manufactured by New Japan Chemical Co., Ltd.) was blended in this composition ratio, and then melt-kneaded and pelletized at a cylinder temperature of 250°C using a twin-screw extruder to prepare a crystal nucleating agent master batch with a crystal nucleating agent concentration of 5 mass%. Next, the polybutylene terephthalate and crystal nucleating agent master batch described above were blended and used as the raw material. The amount of crystal nucleating agent added was 3 parts by mass of the above crystal nucleating agent master batch per 100 parts by mass of polybutylene terephthalate, i.e., an amount of crystal nucleating agent added of 1,500 ppm.
The raw material for the core layer was a high-density polyethylene resin ("Novatec HD," manufactured by Japan Polyethylene Corporation).
In a three-layer T-die film forming machine with three extruders of 40 mm screw diameter, each extruder was charged with each raw material to obtain a multilayer non-stretched polybutylene terephthalate film (multilayer PBT film, thickness: 200 μm) consisting of three layers of two different types, where the skin layers were both PBT resin layers of 50 μm thickness and the core layer was a polyethylene resin layer of 90 μm thickness, with a forming temperature of 250°C, a chill roll temperature of 80°C, and air chamber static pressure of 15 mm $H_2O$.

[Example 9]

The transfer-type resin sheet was prepared by the same method as Example 1, except that the tensile elongation at break of the transfer layer was measured at 100°C, a non-stretched multilayer olefin film 1 ("Convini PP" manufactured by Okamoto Industries, thickness: 100 μm) was used as the transfer layer film, and the main drying step (drying temperature: 90°C, drying time: 30 min) was not performed.

[Example 10]

The transfer-type resin sheet was prepared by the same method as Example 2, except that the tensile elongation at break of the transfer layer was measured at 100°C, a non-stretched multilayer olefin film 2 ("Convini PE" manufactured by Okamoto Industries, thickness: 100 μm) was used as the transfer layer film, and the main drying step (drying temperature: 90°C, drying time: 30 min) was not performed.

[Example 11]

The transfer-type resin sheet was prepared by the same method as Example 3, except that the tensile elongation at break of the transfer layer was measured at 100°C, a non-stretched polyethylene terephthalate film ("Kaneron KA-20" manufactured by Shinei Kasei, thickness: 100 μm) was used as the transfer layer film, and the main drying step (drying temperature: 90°C, drying time: 30 min) was not performed.

[Example 12]

The transfer-type resin sheet was prepared by the same method as Example 1, except that the tensile elongation at break of the transfer layer was measured at 100°C, a biaxially stretched polyethylene terephthalate film ("COSMOPEEL E7004" manufactured by TOYOBO) was used as the transfer layer film, and the formulation of the curable resin composition used for the coating solution was changed as described in Table 3.

[Comparative Example 3]

The transfer-type resin sheet was prepared by the same method as Comparative Example 1, except that a non-stretched multilayer olefin film 1 ("Convini PE" manufactured by Okamoto Industries, thickness: 100 μm) was used as the transfer layer film, the tensile elongation at break of the transfer layer was measured at 100°C, and the main drying step (drying temperature: 90°C, drying time: 30 min) was not performed.

[Comparative Example 4]

The transfer-type resin sheet was prepared by the same method as Comparative Example 2, except that a non-stretched multilayer olefin film 1 ("Convini PE" manufactured by Okamoto Industries, thickness: 100 μm) was used as the transfer layer film, the tensile elongation at break of the transfer layer was measured at 100°C, and the main drying step (drying temperature: 90°C, drying time: 30 min) was not performed.

[Table 2]

| | | | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|
| Coating layer | Formulation (pts. by mass) | (Meth)acrylic resin (A) — A1 | 71 | 65 | 59 | 43 | 53 | 65 | | 65 | 81 | 33 |
| | | (Meth)acrylic resin (A) — A2 | | | | | | | 67 | | | |
| | | Plasticizing resin (a) — al-(1) | 9 | 13 | | | 11 | 13 | | 13 | 3 | |
| | | Plasticizing resin (a) — al-(2) | | | 12 | 19 | | | | | | 23 |
| | | Plasticizing resin (a) — a2 | | | | | | | 30 | | | |
| | | Blocked isocyanate (B) — Takenate B-882N | 20 | 22 | 29 | 38 | 26 | 22 | | 22 | 16 | 43 |
| | | Photo polymerization initiator (C) — Omnirad 1173 | | | | | | | 0.3 | | | |
| | | Pigment (D) — NSP-UP 841B | | | | | 10 | | | | | |
| | Properties | Tack value (N/cm²) | 320 | 540 | 2010 | 3850 | 490 | 550 | 730 | 530 | 100 | 4830 |
| Transfer layer | | Type | Non-stretched cyclic olefin | Non-stretched cyclic olefin | Non-stretched cyclic olefin | Non-stretched cyclic olefin | Non-stretched cyclic olefin | Non-stretched multilayer polybutylene terephthalate | Non-stretched cyclic olefin | Biaxially stretched PET | Non-stretched cyclic olefin | Non-stretched cyclic olefin |
| | Content | Thickness (μm) | 100 | 100 | 100 | 100 | 100 | 100 | 100 | 100 | 100 | 100 |
| | Properties | 120°C MD tensile elongation at break (%) | 721 | 721 | 721 | 721 | 721 | 917 | 721 | 236 | 721 | 721 |
| | | 120°C TD tensile elongation at break (%) | 857 | 857 | 857 | 857 | 857 | 872 | 857 | 260 | 857 | 857 |
| Evaluation | | Scratch resistance (Pencil hardness) | A (B) | A (B) | A (B) | A (B) | A (B) | A (B) | A (B) | A (B) | A (HB) | B (2B) |
| | | Adhesiveness | A | A | A | A | A | A | A | A | B | A |
| | | Vacuum formability | A | A | A | A | A | A | A | B | A | A |

[Table 3]

| | | | | Example 9 | Example 10 | Example 11 | Example 12 | Comparative Example 3 | Comparative Example 4 |
|---|---|---|---|---|---|---|---|---|---|
| Coating layer | Formulation (pts. by mass) | (Meth)acrylic resin (A) | A1 | 71 | 65 | 59 | 65 | 81 | 33 |
| | | | A2 | | | | | | |
| | | Plasticizing resin (a) | al-(1) | 9 | 13 | | 13 | 3 | |
| | | | al-(2) | | | | 12 | | 23 |
| | | | a2 | | | | | | |
| | | Blocked isocyanate | Takenate B-882N | 20 | 22 | 29 | 22 | 16 | 43 |
| | | Photo polymerization initiator | Omnirad 1173 | | | | | | |
| | | Pigment | NSP-UP 841B | | | | | | |
| | Properties | Tack value (N/cm2) | | 320 | 540 | 2010 | 530 | 100 | 4830 |
| Transfer layer | Content | Type | | Non-stretched multilayer olefin 1 | Non-stretched multilayer olefin 2 | Non-stretched PET | Biaxially stretched PET | Non-stretched multilayer olefin 1 | Non-stretched multilayer olefin 1 |
| | | Thickness (μm) | | 100 | 100 | 100 | 100 | 100 | 100 |
| | Properties | 100°C MD tensile elongation at break (%) | | 1750 | 1650 | 723 | 155 | 1750 | 1750 |
| | | 100°C TD tensile elongation at break (%) | | 1700 | 1500 | 831 | 172 | 1700 | 1700 |
| Evaluation | Scratch resistance (Pencil hardness) | | | A (B) | A (B) | A (B) | A (B) | A (HB) | B (2B) |
| | Adhesiveness | | | A | A | A | A | B | A |
| | Vacuum formability | | | A | A | A | B | A | A |

EP 4 588 656 A1

19

Table 4 below shows the content of each component based on the total amount of solid content of the curable resin composition in Examples 1 to 8 and Comparative Examples 1 and 2. However, the amount of active ingredient in the pigment in Example 5 was 2 mass% based on the total amount of solid content of the curable resin composition.

[Table 4]

| Coating layer | Formulation (mass%) | | Solids ratio (NVX mass%) | Example 1 | Example 2 | Example 3 | Example 4 | Example 5 | Example 6 | Example 7 | Example 8 | Comparative Example 1 | Comparative Example 2 |
|---|---|---|---|---|---|---|---|---|---|---|---|---|---|
| | | A1 | 30 | 48 | 41 | 35 | 22 | 33 | 41 | | 41 | 63 | 16 |
| | | A2 | 30 | | | | | | | 40 | | | |
| | | al-(1) | 100 | 20 | 27 | | | 23 | 27 | | 27 | 8 | |
| | | al-(2) | 100 | | | 24 | 32 | | | | | | 37 |
| | | a2 | 100 | | | | | | | 60 | | | |
| | | Takenate B-882N | 70 | 32 | 32 | 41 | 45 | 38 | 32 | | 32 | 29 | 48 |
| | | Omnirad 1173 | 100 | | | | | | | 0.6 | | | |
| | | NSP-UP 841B | 24 | | | | | 5 | | | | | |

EP 4 588 656 A1

In each of the above examples, a transfer-type resin sheet with excellent scratch resistance and adhesiveness could be produced by keeping the tack value at 23°C on the adhesive surface of the coating layer within a certain range. In Examples 1 to 7 and 9 to 11, using a transfer layer with a high tensile elongation at break at 120°C or 100°C allowed the transfer-type resin sheet to conform to the three-dimensional shape of the object to be coated and to adhere uniformly, with good vacuum formability, and to form an appropriate coating from the resin sheet using vacuum forming.

In contrast, in Comparative Examples 1 and 3, the tack value at 23°C on the adhesive surface of the coating layer was too low, resulting in insufficient adhesive strength to the adherend, and therefore successful application was not possible. In addition, in Comparative Examples 2 and 4, the tack value at 23°C on the adhesive surface of the coating layer was too high, and the hardness was insufficient, resulting in poor scratch resistance.

Reference Signs List

10 Transfer-type curable resin sheet for coating

11 Coating layer

12 Transfer layer

13 Mold release film

14 Support layer

20 Object to be coated

30 TOM forming device

31 Upper box

32 Lower box

35 Vertical lifting table

40 Jig

## Claims

1. A transfer-type curable resin sheet for coating, comprising: a coating layer comprising a curable resin composition that is capable of being cured by heat, moisture, or an active energy ray; and a transfer layer comprising a thermoplastic resin,
a tack value at 23°C on a surface of the coating layer on a side opposite to a surface on which the transfer layer is provided being 300 N/cm$^2$ or more and 4,000 N/cm$^2$ or less.

2. The transfer-type curable resin sheet for coating according to claim 1, wherein the transfer layer has a tensile elongation at break at 120°C in both MD and TD of 500% or more.

3. The transfer-type curable resin sheet for coating according to claim 1 or 2, wherein the transfer layer has a tensile elongation at break at 100°C in both MD and TD of 500% or more.

4. The transfer-type curable resin sheet for coating according to any one of claims 1 to 3, wherein the curable resin composition comprises a (meth)acrylic resin (A) and the (meth)acrylic resin (A) has a weight-average molecular weight of 100,000 or more and 1,000,000 or less, is in solid form, and has a plurality of functional groups.

5. The transfer-type curable resin sheet for coating according to claim 4,

wherein the (meth)acrylic resin (A) is a (meth)acrylic polyol (A1), and

the curable resin composition comprises a blocked isocyanate (B).

6. The transfer-type curable resin sheet for coating according to claim 4,

   wherein the (meth)acrylic resin (A) is a polymer (A2) having a (meth)acryloyl group, and
   the curable resin sheet comprises a radical polymerization initiator (C) that generates radicals by heat or an active energy ray.

7. A method for forming a coating, wherein the transfer-type curable resin sheet for coating according to any one of claims 1 to 6 is attached to an object to be coated and then the coating layer is cured to form the coating.

8. The method for forming a coating according to claim 7, wherein the transfer layer is peeled off from the coating layer to remove the transfer layer from the object to be coated.

Fig. 1

10

12
11

Fig. 2

10

12
11
13

Fig. 3

10

12
11
14

# Fig. 4

(a)

(b)

(c)

(d)

Fig. 5

# Fig. 6

(a)

(b)

(c)

(d)

# EP 4 588 656 A1

## INTERNATIONAL SEARCH REPORT

International application No.

**PCT/JP2023/033177**

**A.    CLASSIFICATION OF SUBJECT MATTER**

**B32B 27/00**(2006.01)i; **B32B 27/18**(2006.01)i; **B32B 27/30**(2006.01)i
FI:    B32B27/00 E; B32B27/18 Z; B32B27/30

According to International Patent Classification (IPC) or to both national classification and IPC

**B.    FIELDS SEARCHED**

Minimum documentation searched (classification system followed by classification symbols)

B32B1/00-43/00; C09J7/00-7/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2007-158026 A (THE FURUKAWA ELECTRIC CO., LTD.) 21 June 2007 (2007-06-21) whole document | 1-8 |
| A | JP 2022-101804 A (NITTO DENKO CORP.) 07 July 2022 (2022-07-07) whole document | 1-8 |
| A | JP 2019-77748 A (OJI HOLDINGS CORP.) 23 May 2019 (2019-05-23) whole document | 1-8 |
| A | JP 2020-128492 A (OJI HOLDINGS CORP.) 27 August 2020 (2020-08-27) whole document | 1-8 |
| A | JP 2001-30427 A (TEIJIN LTD.) 06 February 2001 (2001-02-06) whole document | 1-8 |
| A | JP 2009-108502 A (FUJIKURA KASEI CO., LTD.) 21 May 2009 (2009-05-21) whole document | 1-8 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033177**

| Patent document cited in search report | | | Publication date (day/month/year) | Patent family member(s) | | | Publication date (day/month/year) |
|---|---|---|---|---|---|---|---|
| JP | 2007-158026 | A | 21 June 2007 | (Family: none) | | | |
| JP | 2022-101804 | A | 07 July 2022 | WO | 2022/138458 | A1 | |
| | | | | TW | 202233783 | A | |
| JP | 2019-77748 | A | 23 May 2019 | (Family: none) | | | |
| JP | 2020-128492 | A | 27 August 2020 | (Family: none) | | | |
| JP | 2001-30427 | A | 06 February 2001 | (Family: none) | | | |
| JP | 2009-108502 | A | 21 May 2009 | (Family: none) | | | |

Form PCT/ISA/210 (patent family annex) (January 2015)

29

**REFERENCES CITED IN THE DESCRIPTION**

**Patent documents cited in the description**

- JP 5394995 B